# EUROPEAN PATENT APPLICATION

(11) **EP 2 063 656 A1**
(43) Date of publication of application: **27.05.2009**
(21) Application number: 07744730.8
(22) Date of filing: 05.06.2007
(51) Int. Cl.: H04Q 7/38, H04M 1/00

(54) **COMMUNICATION DEVICE**

(30) Priority: 11.09.2006 JP 2006245265
(71) Applicant: Sharp Kabushiki Kaisha, Osaka-shi, Osaka 545-8522 (JP)
(72) Inventor: TSUCHIYA, Shinichi, Chiba 2900056 (JP)
(74) Representative: Müller - Hoffmann & Partner
(86) International application number: PCT/JP2007/061378
(87) International publication number: WO 2008/032479

(57) **Abstract**

In a communication device having a plurality of communication means, it is determined based on a priority or the like which one of the plurality of communication means is used to establish a communication. However, there is a problem that if no communication can be established through a network having a priority, another network, which is not desired by the user, may be selected as a communication channel and used for establishing a communication. Further, if, in order to solve this problem, only a network designated by the user is always to be used for establishing a communication, then no communication may be established for a long time, which is another problem. In order to solve these problems, it is arranged that, when a communication schedule is done, it be possible to designate a network, which should be used first on the priority basis, according to the network communication speed, communication charges or the like, and it is further arranged that, if no communication is established through the designated network, then an undesignated network be selected, thereby improving the certainty of the communication schedule, which is an advantageous effect.

## Description

### BACKGROUND OF THE INVENTION

### Field of the Invention

The present invention relates to reserved communication in a communication apparatus having a plurality of communication methods.

### Description of the Related Art

In recent years, many communication apparatuses have a plurality of communication methods done externally. Examples of the communication methods include GSM, W-CDMA, CDMA2000, IEEE802.11a/b/g, Bluetooth (registered trademark), and Ethernet (registered trademark). Any information transmitted via these communication methods is electronic data, and such type of information can be basically transmitted by means of any communication method. A user selects any one of the plurality of communication methods, and exchanges information.

In Japanese Unexamined Patent Application Publication No. 6-164760, a facsimile apparatus provided with a plurality of facsimile lines is disclosed. In the publicaton, the ISDN line is set to a high-priority line classification, and the analog line is set to a low-priority line classification. Subsequently, when selecting a line, firstly, an unused ISDN line is selected from ISDN lines with high-priority, and if the ISDN lines are in use, an unused analog line is selected from analog lines. Further, the plurality of ISDN lines and the plurality of analog lines are basically ready for communication, and only when in use, the line cannot be selected, and another unused line is selected. Thus, according to the facsimile apparatus disclosed in Japanese Unexamined Patent Application Publication No. 6-164760, it is possible to select an unused line according to priority in real time without user's concern.

However, the real time processing is not always necessary for the data transmitted/received by the communication apparatus. For example, when transmitting/receiving an electronic file, real-time communication is not essential, and if a desired network is unavailable at that point in time, many users may wish to communicate when the network becomes available. In cases where the communication apparatus having a function of utilizing both free and paid networks, the user normally wishes to communicate via the free network, preferably, even when the free network is unavailable at that point in time.

In Japanese Unexamined Patent Application Publication No. 6-164760, when the high-priority line is unavailable, a low-priority line is sequentially used in real-time. Therefore, the apparatus cannot fulfill the above user's demands, and there is a possibility of using a network, not desired by the user.

Moreover, in order to solve the above deficiencies, if the communication is always carried out only via a network designated by the user, when the designated network becomes constantly disconnected for whatever reason, there is a possibility that communication is never recovered.

### SUMMARY OF THE INVENTION

In order to solve the above deficiency, it is an objective of the present invention to provide a communication apparatus, comprising: a communication unit, which is capable of using a plurality of networks based on a reservation of communication, an acceptance unit for reservation of communication, which accepts the reservation of communication designating network, a determination unit, which determines whether a communication link can be established in the designated network, and a control unit, which controls the communication unit to use the designated network, or non-designated network other than the designated network.

In addition, in the communication apparatus, the determination unit may comprise means for determining passage of predetermined period of time to determine inability of establishing a communication link if the link has not been established from an initial trial of establishing the communication link to the end of a predetermined period of time.

In addition, in the communication apparatus, the determination unit may comprise means for determining passage of predetermined time and date to determine inability of establishing a communication link if the link has not been established by a predetermined date.

In addition, in the communication apparatus, the control unit may comprise means for inputting a permission of execution of control in order to acquire the permission of execution of control to utilize non-designated network, and means for controlling utilization of the non-designated network when acquiring the permission of execution from the user.

In another aspect of the present invention, a controlling method for communication apparatus, which is capable of using a plurality of networks based on a reservation of communication, the method comprises the steps of: accepting the reservation of communication designating network, determining whether a communication link can be established in the designated network; and controlling utilization of the designated network, or of non-designated network other than the designated network in accordance with the determination result by the determining step.

In addition, in the controlling method for communication apparatus, the step of determining may comprise a substep of determining passage of predetermined period of time to determine inability of establishing a communication link if the link has not been established from an initial trial of establishing the communication link to the end of a predetermined time.

In addition, in the controlling method for communication apparatus, the step of determining may comprise a substep of determining passage of predetermined time and date to determine inability of establishing a communication link if the link has not been established by a predetermined date.

In addition, in the controlling method for communication apparatus, the step of determining may comprise a substep of inputting a permission of execution of control in order to acquire the permission of execution of control to utilize non-designated network, and a substep of controlling utilization of the non-designated network when acquiring the permission of execution from the user.

According to the communication apparatus and the controlling method of the communication apparatus of the present invention, even when the designated network is unavailable due to being out of service or congested etc., utilization of the network is reserved, so that it is possible to utilize the designated network after recovery from being out of order or congested. Therefore, it is possible to utilize a network, designated based on transmission speed or communication cost of the network upon the reservation of communication, with relatively high probability.

Moreover, when a communication is not established in the designated network, it is controlled to select a non-designated network, thereby ensuring the reservation of communication.

### BRIEF DESCRIPTION OF THE DRAWINGS

Fig. 1 is a schematic diagram of a first embodiment of the present invention
Fig. 2 is a functional block diagram of the first embodiment of the present invention.
Fig. 3 is a diagram showing GUI when designating a network.
Fig. 4 is a diagram showing a concrete example of the first embodiment of the present invention.
Fig. 5 is a flowchart of the first embodiment of the present invention.
Fig. 6 is a functional block diagram of a second embodiment of the present invention.
Fig. 7 is a flowchart of the second embodiment of the present invention.
Fig. 8 is a functional block diagram of a third embodiment of the present invention.
Fig. 9 is a diagram showing GUI when giving permission of execution.
Fig. 10 is a flowchart of the third embodiment of the present invention.
Fig. 11 is a diagram showing a hardware configuration of a communication apparatus.
Fig. 12 is a functional block diagram of a fourth embodiment of the present invention.
Fig. 13 is a flowchart of the fourth embodiment of the present invention.

### DETAILED DESCRIPTION OF THE PREFERRED EMBODIMENTS

Embodiments of the present invention will be described hereinbelow with reference to the drawings. The present invention is not to be limited to the above embodiments and able to be embodied in various forms without departing from the scope thereof.

### <Hardware configuration common to all embodiments>

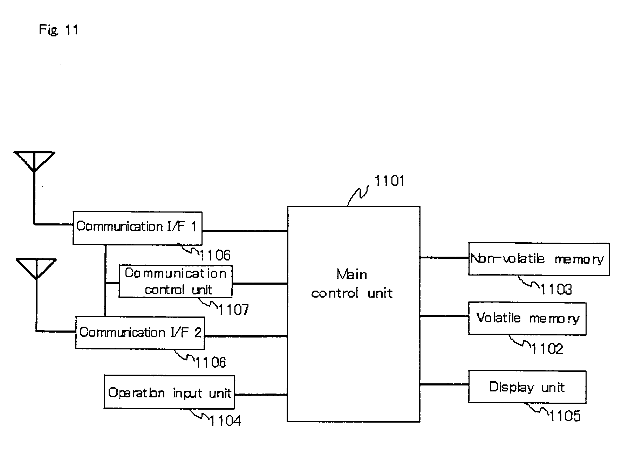

Fig. 11 is a diagram showing a common hardware configuration of the communication apparatuses of the first to third embodiments.

Note that the respective units of the communication apparatuses of the first to third embodiments are configured by hardware, software, or both hardware and software.

The communication apparatus of Fig. 11 is implemented by hardware configured by a main control unit (1101) configured by CPU etc., a volatile memory (1102), a non-volatile memory (1103), an operation input unit (1104), a display unit (1105), and communication I/F (1106), providing a plurality of communication methods, and by software operable on the hardware. A communication control unit (1107) etc., executing a communication control program for controlling the communication I/F, is provided as the software. The communication control program itself is stored in the non-volatile memory (1103) etc., and is developed on the volatile memory according to necessity, and operated by computation by the main control unit.

Specifically, the communication unit of the present invention is configured mainly by the communication I/F (1106), and the communication control unit (1107) etc. of Fig. 11. In addition, the acceptance unit for reservation of communication of the present invention is configured mainly by the operation input unit (1104), the main control unit (1101), the non-volatile memory (1103), and, a display unit (1105) etc. In addition, the determination unit of the present invention is configured mainly by the communication control unit (1107), and the main control unit (1101) etc. In addition, the control unit of the present invention is configured mainly by the communication control unit (1107), and the main control unit (1101) etc. Note that Fig. 11 shows an example of a hardware configuration of the present invention, and a hardware configuration of the present invention is not limited to the above.

### <<First embodiment>>

### <Concept of First Embodiment>

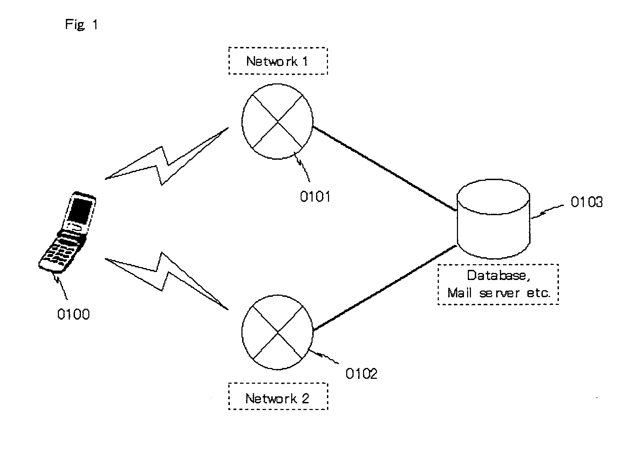

A first embodiment will be described hereinafter. Fig. 1 is a schematic diagram of a first embodiment of the present invention. As shown in Fig.1, a communication apparatus (0100) may utilize a plurality of networks (0101 and 0102), and may communicate with a server etc. (0103) via any of the networks. In this case, the communication apparatus (0100) may designate any of the networks and communicate via the network. Subsequently, when communication link of the designated network is established, the communication is carried out. However, when communication link is not established, communication link is established via a network other than the designated network based on predetermined conditions.

### <Configuration of First Embodiment>

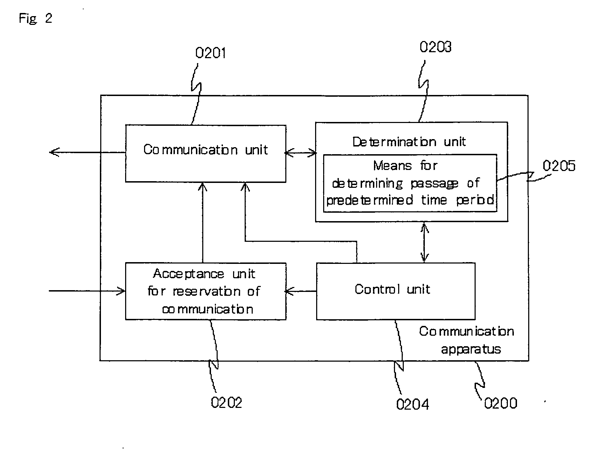

Fig. 2 is a functional block diagram of the first embodiment of the present invention. A 'communication apparatus' (0200) of the first embodiment comprises a 'communication unit' (0201), an 'acceptance unit for reservation of communication' (0202), a 'determination unit' (0203), and a 'control unit' (0204). In addition, the determination unit may comprise 'means for determining passage of predetermined period of time' (0205).

### <Description of Configuration of First Embodiment>

The 'communication apparatus' (0200) is an apparatus having a plurality of communication methods. The communication apparatus may be embodied in various forms, and is preferably a movable apparatus such as a mobile phone, a PHS, a PDA, a note PC, a portable game console, a portable music player, or a remote control.

The 'communication unit' (0201) is configured to be able to use a plurality of networks based on a reservation of communication. The plurality of networks include GSM, W-CDMA, CDMA2000, FDMA, TDMA, PDC, PHS, GPRS, IEEE802.11a/b/g, Bluetooth (registered trademark), IrDA Ethernet (registered trademark), ISDN line, CATV line, and optical fiber line, and may be either wired or wireless. The communication unit may comprise a plurality of networks of one type, or a plurality of networks of a different type.

The term 'reservation of communication' means that information to be transmitted from the communication unit is set to be in a wait state for communication, so that the communication is started when the communication link of network can be established. The communication unit can carry out communication of the information in the wait state for communication via the network based on the reservation of communication accepted by the after-mentioned acceptance unit for reservation of communication when the communication link of network can be established. Note that the communication may be carried out immediately after establishment of the communication link, may be carried out after passage of a certain period of time after the establishment of the communication link, or may be carried out at a predetermined time after the establishment of the communication link. The communication includes not only transmission of the information (uploaded to a server etc.) but also reception of the information (downloaded from a server etc.). In the communication apparatus of the first embodiment, control of selecting a network is carried out by a terminal, so that it is necessary to send information indicating that the communication unit can carry out communication via the designated network. from the communication apparatus to the server etc. Therefore, the communication unit sets the information, indicating that the communication is possible, to be in the wait state for communication, and receives information from the server etc. after transmitting the above information.

The 'acceptance unit for reservation of communication' (0202) is configured to accept the reservation of communication designating network. Examples of the information, of which communication is to be reserved, include information transmitted from the communication apparatus such as sent e-mail, electronic files to be uploaded to a server (e.g., movie files, music files, text files, and various application files), control information for operating home appliances, or reservation information for video recording, and information to be received such as incoming e-mail, electronic file to be downloaded from a server (e.g., movie files, music files, text files, and various application files), control information for operating home appliances, or reply of the reservation information for video recording. Note that the information is not limited to the above, and the information, of which communication is to be reserved, may include general electronic files.

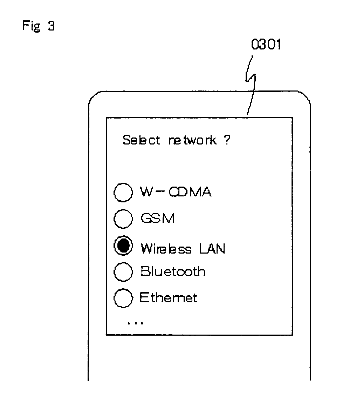

The designation of the network can be carried out on a GUI screen displayed on a display unit (0301) as shown in Fig. 3. Since the movie file etc. has a large file size, it is preferable to utilize a network with a high-capacity and with high-speed. Therefore, in the case of transmitting the movie file, Ethernet (registered trademark) is designated and the reservation of communication is carried out, thereby improving user-friendliness. Further, in the case of transmitting/receiving e-mail, since its file size is comparatively small, and many users wish to immediately carry out communication, W-CDMA is designated and the reservation of communication is carried out, thereby improving user-friendliness. Such configuration may be carried out one by one by the user upon reservation of communication, or may be automatically carried out according to conditions by the acceptance unit for reservation of communication. For example, network may be designated according to file size, or to file format such as movie file or text file. In addition, from communication history of transmitted/received file and the network designated then, a network having the same capacity or file type may be designated. Addition, importance or urgency etc. is set with respect to each data to be transmitted, and as to the information with high-importance, a wired network may be designated in order to prevent disconnection of line or external leakage of the information, or as to the information with high-urgency, a high-speed network may be designated from available networks which can be immediately used. In addition, for example, a user sets only condition such as 'a network of short intermittent intervals is automatically assigned as a designated network' or 'a network of low power consumption of a terminal upon communication is automatically assigned as a designated network', and the acceptance unit for reservation of communication may designate a network in accordance with the condition. In addition, a designated network or a non-designated network may be preliminarily limited by an application. For example, in the case of sending e-mail (application 1), IEEE802.11 b may be assigned as a designated network, and Ethernet or W-CDMA may be limited to the non-designated network. In the case of download from a server (application 2), Ethernet may be assigned as the designated network, and IEEE802.11b may be assigned as the non-designated network. Moreover, in this case, the priority may be given to the non-designated networks.

The 'determination unit' (0203) is configured to determine whether a communication link can be established in the designated network. The determination unit carries out polling for the network, designated by the reservation of communication accepted by the acceptance unit for reservation of communication (0202), constantly or based on a predetermined schedule such as a certain interval, thereby determining whether the communication link can be established in the designated network. The determination unit continuously checks the establishment of the communication link until the establishment of the communication link of the designated network is confirmed, or inability of communication via the designated network is determined after the acceptance of the reservation of communication.

The determination as to whether the communication link can be established may be carried out as follows. In cases where the communication apparatus is a mobile phone, the establishment of the communication link of W-CDMA can be determined based on whether an off-hook of the mobile phone is detected in a base-station, and a reply from the base-station is detected by the mobile phone, on whether information regarding unused channel for call is detected from an exchange control station, or on whether a replay from a call target is directly received.

The designated network is a network designated by the acceptance unit for reservation of communication (0202). As to the designated network, one network may be designated, or a plurality of networks may be designated. For example, all of the designated networks may be free networks. In cases where the plurality of networks are designated networks, priority may be given to the designated networks.

The 'means for determining passage of predetermined period of time' (0205) is comprised by the determination unit, and determines inability of establishing a communication link if the link has not been established from an initial trial of establishing the communication link to an end of a predetermined time. For example, in cases where a predetermined time is set to 5 minutes, and if the link has not been established within 5 minutes from an initial trial of establishing the communication link in the determination unit, inability of establishing a communication link is determined. The predetermined time may be preliminarily set in the communication apparatus, or may be set by the user.

The 'control unit' (0204) is configured to control the communication unit to use the designated network or non-designated network other than the designated network in accordance with a determination result by the determination unit (0203). In cases where the determination unit determines that the establishment of the communication link is possible, the control unit controls the communication unit to use the designated network. Meanwhile, in cases where the determination unit determines that the establishment of the communication link is impossible, the control unit controls the communication unit to use the non-designated network. The non-designated network is a network other than the designated network. Since there is a possibility that a plurality of networks are set as the non-designated network, priority may be given to the non-designated networks. In addition, as described above, a plurality of networks can be set as the designated network, and priority may be given to both designated networks and non-designated networks.

In cases where the establishment of the communication link is impossible, and the control unit controls the communication unit to use the non-designated network, selection means, in which a user carries out selection as to approval of switching before switching to a non-designated network, may be provided. This will be concretely described in the third embodiment. Moreover, means for notifying utilized network in order to notify start of communication, state of under communication, or termination of communication may be provided. In cases where the means for notifying utilized network is provided, notification method (e.g., notification sound or notification screen) may be changed depending on whether designated network is utilized or non-designated network is utilized, thereby distinctly notifying the utilized network.

### <Concrete Example of First Embodiment>

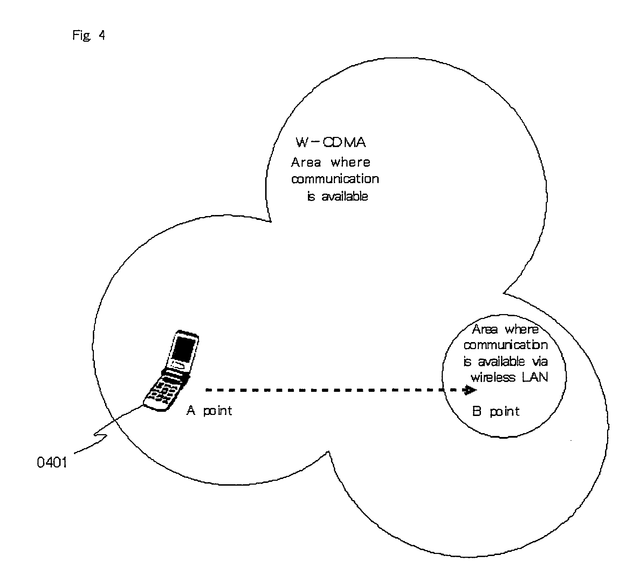

A concrete example will be described with reference to Fig. 4. In this concrete example, the case where a mobile phone having functions of W-CDMA and wireless LAN is utilized as the communication apparatus (0401) will be described. At point A, W-CDMA function of the mobile phone is available, but wireless LAN function is out of order. In cases where the acceptance unit for reservation of communication of the communication apparatus accepts a reservation of communication of a reservation mail of video recording, in which wireless LAN is used as a designated network, the mobile phone cannot establish a communication link via the designated network, so that the reservation mail of video recording becomes in a wait state for communication.

In cases where the determination unit does not comprise the means for determining passage of predetermined period of time, it may be immediately determined that the communication link via the designated network cannot be established, or it may be determined that the communication link via the designated network cannot be established within 5 trials, for example. When it is determined that the communication link via the designated network cannot be established, the control unit controls to utilize W-CDMA as non-designated network. The communication unit transmits the reservation mail of video recording by means of W-CDMA based on the control by the control unit.

In cases where the determination unit comprises the means for determining passage of predetermined period of time, the determination unit continuously carries out trial for establishing a communication link from an initial trial of establishing the communication link to the end of a predetermined period of time. Subsequently, in cases where the mobile phone moves to B point, at which communication is available via wireless LAN, within a predetermined period of time, the communication link can be established, so that the determination unit determines that the communication via the designated network is possible, and the control unit controls to utilize wireless LAN as the designated network. The communication unit transmits the reservation mail of video recording by means of wireless LAN based on the control by the control unit. Further, in cases where the mobile phone does not move to the area, where communication is available via wireless LAN, within a predetermined period of time, the determination unit determines that the communication via the designated network is impossible, and the control unit controls to utilize the non-designated network.

In the above example, the case where one designated network and one non-designated network exist is described, and it is possible to set a plurality of designated networks or non-designated networks. For example, it is possible to give priority such as a first candidate, a second candidate, a third candidate, and a fourth candidate to the plurality of non-designated networks. In this case, if the communication link via the designated network cannot be established, the control unit controls to carry out trial of establishing communication link via the first candidate of the non-designated network. In addition, if the communication link via the designated network and via the first candidate of the non-designated network cannot be established, the control unit controls to carry out trial of establishing communication link via the second candidate of the non-designated network. After that, similar processing is carried out as to the third and the fourth candidates.

### <Processing Flow of First Embodiment>

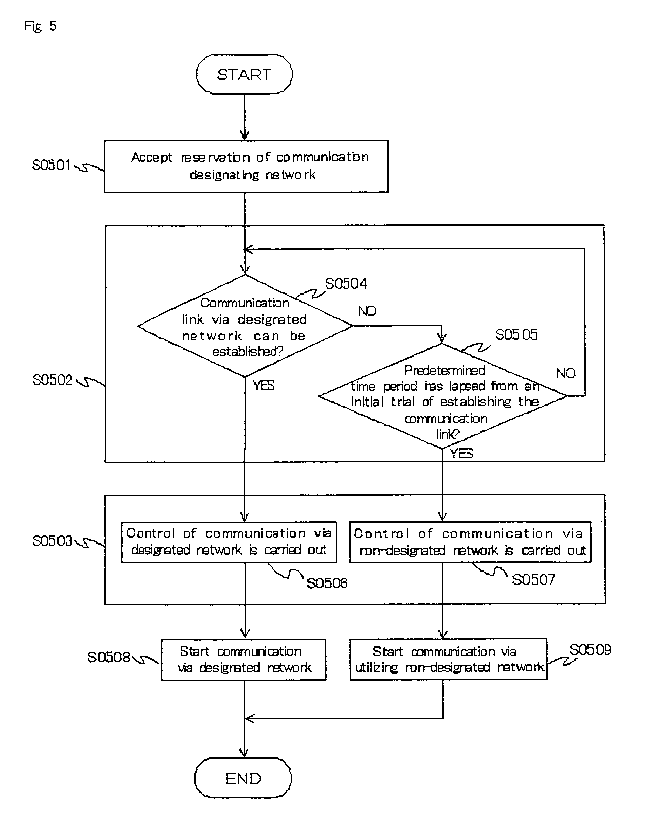

Fig. 5 shows a basic flowchart of a controlling method for the communication apparatus of the first embodiment. The controlling method for communication apparatus, which is capable of using a plurality of networks based on a reservation of communication. At the outset, a reservation of communication designating network is accepted (S0501: step of accepting the reservation of communication). Subsequently, it is determined whether a communication link can be established in the designated network (S0502: step of determining). Subsequently, step of controlling (S0503) controls utilization of the designated network or of non-designated network other than the designated network in accordance with the determination result by the determining step (S0502).

In cases where a determination result by the step of determining (S0502) indicates that the establishment of the communication link is possible (S0504 YES), the step of controlling controls to carry out communication by utilizing the designated network (step S0506). Meanwhile, in cases where a determination result indicates that the establishment of the communication link is impossible (S0504 NO), the step of controlling controls to carry out communication by utilizing the non-designated network (step S0507). Note that in cases where the step of determining further comprises a substep of determining passage of predetermined period of time (S0505), if the determination result indicates that the establishment of the communication link is impossible (S0504 NO), it is determined whether a predetermined period of time has elapsed from an initial trial of establishing the communication link (S0505). In cases where the predetermined period of time has not elapsed (S0505 NO), it is continuously determined whether the communication link via the designated network can be established. In cases where the predetermined period of time has elapsed (S0505 YES), it is determined that the communication link via the designated network cannot be established, and in the step of controlling (S0503), control in accordance with the determination result is carried out.

Note that in cases where the step of controlling controls to carry out communication by utilizing the designated network (step S0506), communication is started by utilizing the designated network (step S0508). Meanwhile, in cases where the step of controlling controls to carry out communication by utilizing the non-designated network (step S0507), communication is started by utilizing the non-designated network (step S0509). Moreover, in cases where the means for notifying utilization is comprised, a substep of determining utilization to notify a network utilized upon communication may be comprised.

### <Brief Description of Effects of First Embodiment>

According to the communication apparatus and the controlling method of the communication apparatus of the first embodiment, even when the designated network is unavailable due to being out of service or congested etc., utilization of the network is reserved, so that it is possible to utilize the designated network after recovery of being out of order or congested. Therefore, it is possible to utilize a network, designated based on transmission speed or communication cost of the network upon the reservation of communication, with comparatively high probability.

Moreover, when a communication is not established in the designated network, it is controlled to select a non-designated network, thereby ensuring the reservation of communication.

### <<Second embodiment>>

### <Concept of Second Embodiment>

A second embodiment will be described hereinafter. The communication apparatus of the second embodiment is based on the communication apparatus of the first embodiment, and a determination method in the determination unit is different. The determination unit of the second embodiment determines inability of establishing a communication link if the link has not been established by a predetermined date.

### <Configuration of Second Embodiment>

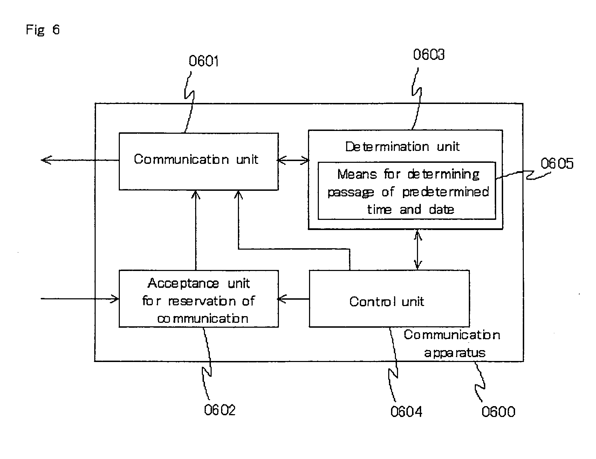

Fig. 6 is a functional block diagram of the communication apparatus of the second embodiment. A 'communication apparatus' (0600) of the first embodiment comprises a 'communication unit' (0601), an 'acceptance unit for reservation of communication' (0602), a 'determination unit' (0603), and a 'control unit' (0604). In addition, the determination unit may comprise 'means for determining passage of predetermined time and date' (0605).

### <Description of Configuration of Second Embodiment>

The 'means for determining passage of predetermined time and date' (0605) is means for determining inability of establishing a communication link if the link has not been established by a predetermined date. The predetermined time and date means information indicating date and time as 'month, day, hour and minutes', or only date or time.

For example, in a concrete example of the first embodiment as shown in Fig. 4, in order to ensure the reservation of communication, a communication has to be carried out before time and date of the reservation of recording. In such case, if '1 hour before the time and date of the recording' is set, the means for determining passage of predetermined time and date (0605) determines inability of establishing a communication link if the link has not been established 1 hour before the date of the recording. Subsequently, the control unit controls to utilize the non-designated network, and the reservation information of recording is transmitted via the non-designated network.

In addition, the predetermined time and date may be associated with a scheduler etc. For example, it is assumed that the communication apparatus has functions of W-CDMA and wireless LAN, and wireless LAN is available in the communication apparatus user's house. In this case, if the user usually comes back home around 18:00, it is effective to set the predetermined time and date to 19:00. In such case, if the user inputs reservation information of video recording, a plan or a note to be written in a schedule book, or information of song to be downloaded etc. to the communication apparatus, and designates wireless LAN as a designated network, it is highly possible that the communication link via the designated network has already become establishable by 19:00 as the predetermined time and date, so that the user can carry out communication by means of the designated network. If the user comes back home after 19:00 due to working overtime, the communication is carried out via the non-designated network, there is no possibility that the information to be communicated stays in the communication apparatus.

In addition, the predetermined time and date may be associated with positional information of the communication apparatus. For example, in cases where a user is in a train, the positional information is acquired by GPS etc. at a predetermined time interval, thereby calculating moving speed and moving direction of the communication apparatus. It is possible to partially estimate a destination of the communication apparatus based on the calculated moving direction and moving speed. Therefore, it is possible to estimate that the remaining time before the predetermined time and date, at which switching to communication via a non-designated network is executed, is short, but communication via the designated network becomes possible a few minutes later. In such a case, the predetermined time and date may be automatically extended based on the estimation. In addition, in cases where a user goes to an area having a poor communication network, by estimating a destination of the communication apparatus, it is possible to preliminarily know that all networks become unavailable after a few minutes. In such a case, the communication may be started by utilizing an available network irrespective of designated network or non-designated network before the predetermined time and date. Note that similar control can be carried out by the means for determining passage of predetermined period of time as described in the first embodiment.

### <Processing Flow of Second Embodiment>

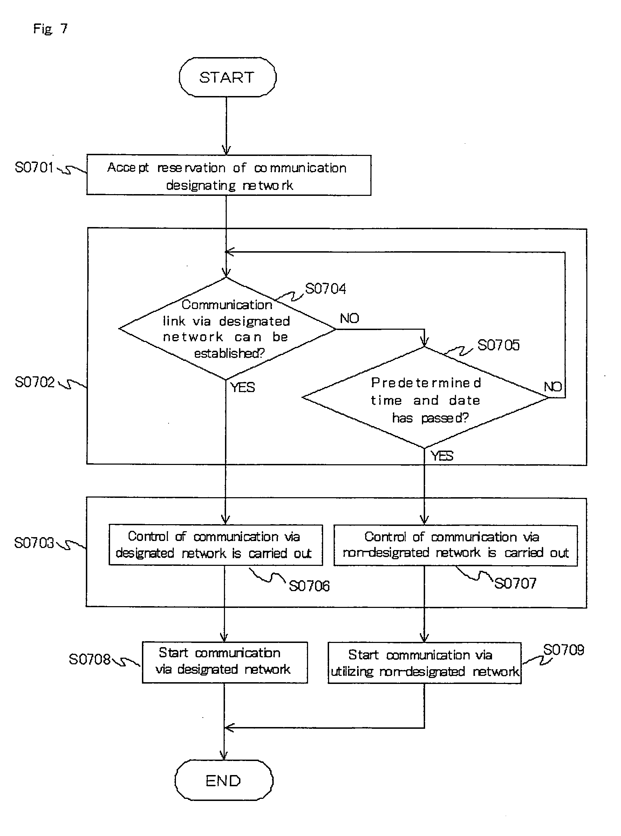

Fig. 7 shows a basic flowchart of a controlling method for the communication apparatus of the second embodiment. The controlling method for communication apparatus of the second embodiment is based on the controlling method of the first embodiment, and is different in that a substep of determining passage of predetermined time and date (S0705) determines in the step of detaining (S0702) whether establishment of a communication link via a designated network is possible. The other steps are the same as those of the first embodiment, so that descriptions are omitted.

The substep of determining passage of predetermined time and date (S0705) determines inability of establishing a communication link if the link has not been established by a predetermined time and date. Therefore, trial for establishing a communication link via a designated network is continuously carried out until the predetermined time and date, and if the communication link is established, it is determined that the establishment of the communication link is possible. If the communication link is not established by the predetermined time and date, it is determined that the establishment of the communication link is impossible. In accordance with the determination result, control of network to be utilized is carried out after the step of controlling (S0703).

### <Brief Description of Effects of Second Embodiment>

According to the communication apparatus and the controlling method of the communication apparatus of the second embodiment, in addition to the effect of the first embodiment, by comprising the means for determining passage of predetermined time and date, it is possible to set period for carrying out trial for establishing the communication link via the designated network, thereby effectively utilizing the designated network. Moreover, if the period lapses, it is possible to ensure the communication.

### <<Third embodiment>>

### <Concept of Third Embodiment>

A third embodiment will be described hereinafter. The communication apparatus of the third embodiment is based on the communication apparatus of the first and second embodiments, and a determination method in the determination unit is different. The control unit of the third embodiment acquires a permission of execution of utilizing non-designated network from a user when utilizing the non-designated network.

### <Configuration of Third Embodiment>

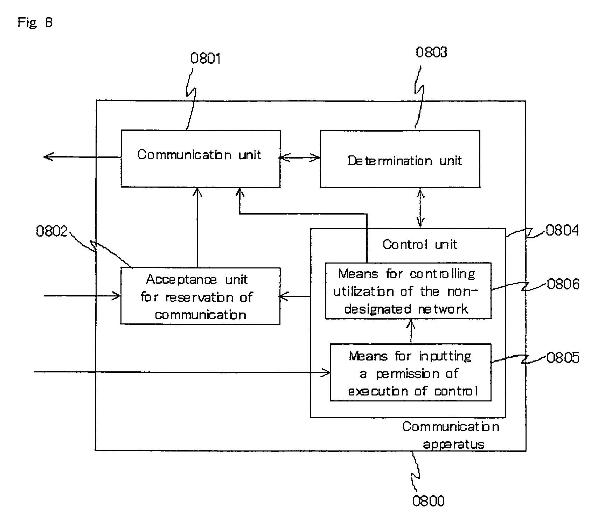

Fig. 8 is a functional block diagram of the communication apparatus of the second embodiment. A 'communication apparatus' (0800) of the third embodiment comprises a 'communication unit' (0801), an 'acceptance unit for reservation of communication' (0802), a 'determination unit' (0803), and a 'control unit' (0804). In addition, the control unit may comprise 'means for inputting a permission of execution' (0805), and 'means for controlling utilization of the non-designated network' (0806).

### <Description of Configuration of Third Embodiment>

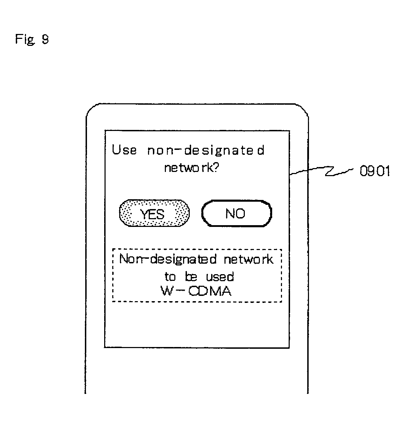

The 'means for inputting a permission of execution' (0805) is means for inputting a permission of execution of control in order to acquire the permission of execution of control to utilize non-designated network. In cases where a determination result in the determination unit (0803) indicates that the communication link via the designated network cannot be established, the communication unit (0801) is controlled to utilize a non-designated network. Before the control, the means for inputting a permission of execution (0805) acquires the permission of execution of control to utilize non-designated network from a user. For example, the means for inputting a permission of execution displays a screen as shown in Fig. 9 on a display unit (0901) of the communication apparatus, and accepts input by the user. In cases where the user carries out operation on the display screen, and does not give permission (i.e., the case of 'NO' in Fig. 9), the control unit may control to continue trial for establishing the communication link via the designated network, or may control to carry out trial for establishing the communication link again after passage of the predetermined period of time. In the case of giving permission (i.e., the case of 'YES' in Fig. 9), the after-mentioned means for controlling utilization of the non-designated network (0806) carries out control to utilize the non-designated network.

It is highly possible that the above case is caused due to data having large file size etc., so that the means for inputting a permission of execution (0805) may be used only for a file of a specific file format or a file having larger size than a certain size.

The 'means for controlling utilization of the non-designated network' (0806) is means for controlling utilization of the non-designated network when acquiring the permission of execution from the user. When the permission of execution from the user is inputted by the means for inputting permission of execution (0805), the means for controlling utilization of the non-designated network controls to utilize the non-designated network other than the designated network. The communication unit (0801) carries out communication by utilizing the non-designated network based on the control.

### <Processing Flow of Third Embodiment>

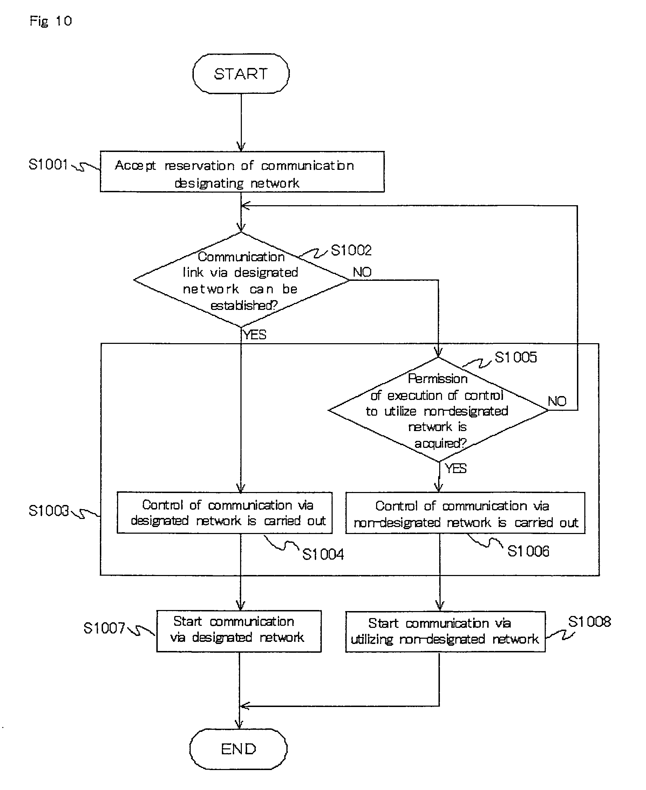

Fig. 10 shows a basic flowchart of a controlling method for the communication apparatus of the third embodiment. The controlling method for communication apparatus of the third embodiment is based on the controlling method of the first and second embodiments, and is different in that a step of controlling (S1003) is comprised. The other steps are the same as those of the first and second embodiments, so that descriptions are omitted. In the third embodiment, the substep of inputting permission of execution (S1005) and the substep of controlling utilization of the non-designated network (S1006) carry out control as to whether the communication unit utilizes the designated network or the non-designated network. The substep of inputting a permission of execution (S1005) displays a confirmation screen as shown in Fig. 9, and acquires the permission of execution of control to utilize non-designated network from the user. When the permission of execution is acquired from the user (S1005, YES), the substep of controlling utilization of the non-designated network (S1006) carries out control to utilize the non-designated network. Based on the control, the non-designated network is utilized in subsequent processes. In cases where the permission of execution from the user is not acquired (S1005, NO), the step of controlling may control to continue trial for establishing the communication link via the designated network, or may control to carry out trial for establishing the communication link again after passage of the predetermined period of time.

### <Brief Description of Effects of Third Embodiment>

According to the communication apparatus and the controlling method of the communication apparatus of the third embodiment, in addition to the effect of the first and second embodiments, by comprising the means for inputting a permission of execution, it is possible to allow the user to determine whether communication to the non-designated network is carried out, thereby selecting a network which meets the needs of the user.

### <<Fourth embodiment>>

### <Concept of Fourth Embodiment>

A fourth embodiment will be described hereinafter. The communication apparatus of the fourth embodiment is based on the communication apparatus of the first to third embodiments, and processing by the control unit in a wait state for determination on establishment of the communication link is different.

### <Configuration of Fourth Embodiment>

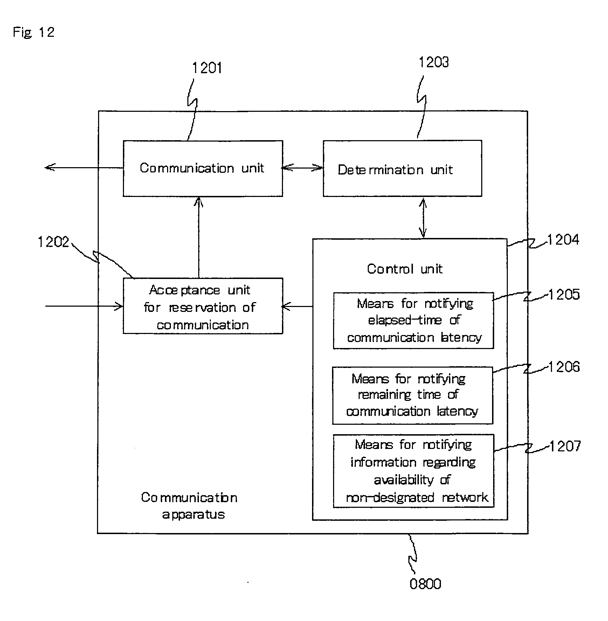

Fig. 12 is a functional block diagram of the communication apparatus of the fourth embodiment. A 'communication apparatus' (1200) of the fourth embodiment comprises a 'communication unit' (1201), an 'acceptance unit for reservation of communication' (1202), a 'determination unit' (1203), and a 'control unit' (1204). In addition, the control unit may comprise any one or some of 'means for notifying elapsed-time of communication latency' (1205), 'means for notifying remaining time of communication latency' (1206), and 'means for notifying information regarding availability of non-designated network' (1207).

### <Description of Configuration of Fourth Embodiment>

The 'means for notifying elapsed-time of communication latency' (1205) is means for notifying elapsed-time of communication latency from the initial trial of establishing the communication link.

The means for notifying elapsed-time measures and notifies passage time from the initial trial of establishing the communication link in a state where it is undetermined by the determination unit whether the communication link can be established. Therefore, the user can know how much time is spent on establishing the communication link at that point. The notification timing by the means for notifying elapsed-time may be carried out at every 1 minute, 10 minutes, 1 hour etc. or at the point where half of the maximum allowable communication latency from the initial trial of establishing the communication link. The notification of elapsed-time may be carried out by voice etc. or by display screen etc.

The 'means for notifying remaining time of communication latency' (1206) is means for notifying remaining time of communication latency, which is acquired by subtracting the elapsed-time of communication latency from the initial trial of establishing the communication link from a maximum allowable communication latency. The 'maximum allowable communication latency' is maximum allowable communication latency from the initial trial of establishing the communication link, which is determined based on a predetermined period of time in the means for determining passage of predetermined period, or on a predetermined time and date in the means for determining passage of predetermined time and date of the second embodiment. In a state where it is undetermined by the determination unit whether the communication link can be established, the means for notifying remaining time of communication latency measures elapsed-time from the initial trial of establishing the communication link to the present, and acquires remaining time of communication latency by subtracting the elapsed-time from the maximum allowable communication latency, thereby notifying the remaining time of communication latency. For example, in the means for notifying remaining time of communication latency, in cases where the predetermined time is set to 5 minutes, if the communication link has not been established at 3 minutes after the initial trial of establishing the communication link, the remaining time of communication latency is 2 minutes. Therefore, the user can know how much time is required for establishing the communication link by utilizing the non-designated network. The notification timing by the means for notifying remaining time of communication latency may be carried out at every 1 minute, 10 minutes, 1 hour etc., at the point where half or 10 % of the maximum allowable communication latency from the initial trial of establishing the communication link, or at the point where remaining time of communication latency is 10 minutes. The notification of remaining time of communication latency may be carried out by voice etc. or by display screen etc.

The 'means for notifying information regarding availability of non-designated network' (1207) is means for notifying availability of non-designated network when the non-designated network is available in a waiting state for the determination result by the determination unit.

The 'waiting state for the determination result' is a state where the communication link via the designated network is not established and a determination by the determination unit as to whether the establishment of the communication link via the designated network is possible is suspended. In this state, the control unit cannot establish the communication link via the designated network, and cannot establish the communication link via the non-designated network since a determination indicating that the establishment of the communication link via the designated network is impossible is not acquired. In such wait state for determination result, the means for notifying availability of non-designated network detects availability of non-designated network, and if the non-designated network is available, notifies to the user that the non-designated network is available. Therefore, the user cannot use the designated network at the point of the notification, but he can know that the non-designated network is available. According to the notification, the user can cancel the instruction to establish the communication link via the designated network, and can give an instruction to establish the communication link via another network as the non-designated network. In cases where the user is in a hurry for transmission of information in the wait state for establishment of the communication link, by the above processing, it is possible to resolve the state for establishment of the communication link, and to establish the communication link via the non-designated network.

### <Processing Flow of Fourth Embodiment>

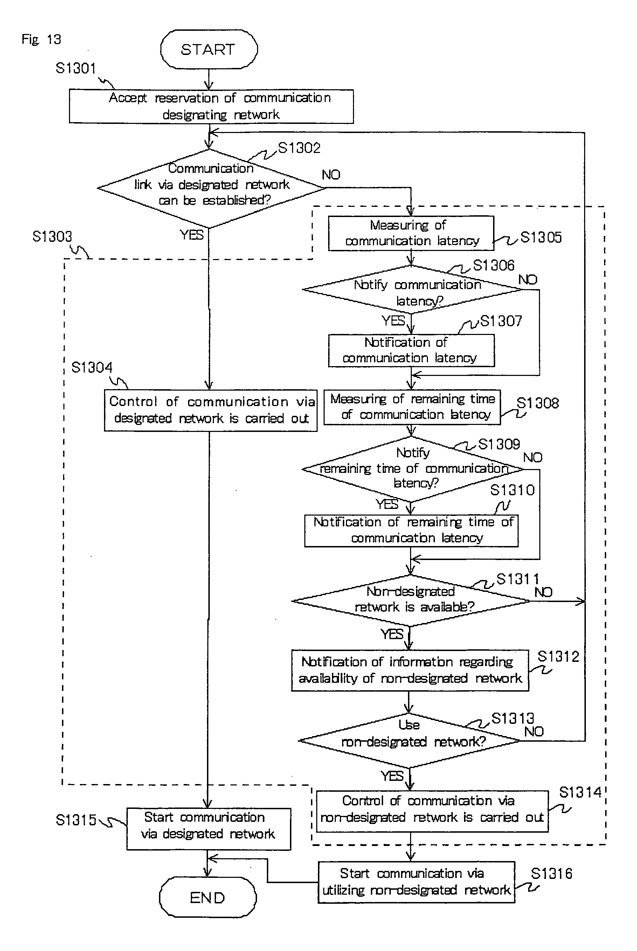

Fig. 13 shows a basic flowchart of a controlling method for the communication apparatus of the fourth embodiment. The controlling method for communication apparatus of the third embodiment is based on the controlling method of the first and third embodiments, and is different in that a step of controlling (S1303) is comprised in cases where the establishment of the communication link via the designated network is impossible (S 1302, NO).

In cases where a substep of notifying elapsed-time of communication latency is comprised, at the outset, elapsed-time of communication latency is measured (S1305), when accepting an instruction to notify elapsed-time of communication latency, the substep of notifying elapsed-time of communication latency notifies the elapsed-time of communication latency (1307). In addition, in cases where a substep of notifying remaining time of communication latency is comprised, remaining time of communication latency is measured, and when receiving an instruction to notify the remaining time of communication latency, the substep of notifying remaining time of communication latency notifies the remaining time of communication latency. The instruction to notify the elapsed-time of communication latency and/or the remaining time of communication latency is preliminarily determined as a notification rule, and is outputted at every predetermined time. In addition, in cases where a substep of notifying information regarding availability of non-designated network is comprised, it is detected whether the non-designated network is available (S1311), and when the non-designated network is available, the substep of notifying regarding availability of non-designated network notifies information regarding availability of non-designated network (S 1312). If the user instructs to utilize the non-designated network, the control unit controls to utilize the non-designated network for communication (S1314), and the communication by utilizing the non-designated network is started (S1316). Note that, by the processes as described in the first to third embodiments, the communication by utilizing the non-designated network may be started.

### <Brief Description of Effects of Fourth Embodiment>

According to the communication apparatus and the controlling method of the communication apparatus of the fourth embodiment, in addition to the effect of the first and third embodiments, by comprising any one of the 'means for notifying elapsed-time of communication latency', the 'means for notifying remaining time of communication latency', and the 'means for notifying information regarding availability of non-designated network', the user can know the state of establishment of the communication link by the notification. Therefore, the user can immediately instruct processing according to the state of establishment of the communication link, thereby improving user-friendliness.

## Claims

1. A communication apparatus, comprising:
a communication unit, which is capable of using a plurality of networks based on a reservation of communication:
an acceptance unit for reservation of communication, which accepts the reservation of communication designating network;
a determination unit, which determines whether a communication link can be established in the designated network; and
a control unit, which controls the communication unit to use the designated network or non-designated network other than the designated network in accordance with a determination result by the determination unit.

2. The communication apparatus according to Claim 1,
wherein said determination unit comprises,
means for determining passage of predetermined period of time to determine inability of establishing a communication link if the link has not been established from an initial trial of establishing the communication link to the end of a predetermined period of time.

3. The communication apparatus according to Claim 1,
wherein said determination unit comprises,
means for determining passage of predetermined time and date to determine inability of establishing a communication link if the link has not been established by a predetermined time and date.

4. The communication apparatus according to any one of Claims 1 to 3,
wherein said control unit comprises,
means for inputting a permission of execution of control in order to acquire the permission of execution of control to utilize non-designated network, and means for controlling utilization of the non-designated network when acquiring the permission of execution from said user.

5. The communication apparatus according to any one of Claims 1 to 4,
wherein said control unit comprises,
means for notifying utilized network.

6. The communication apparatus according to any one of Claims 1 to 5,
wherein said control unit comprises,
means for notifying elapsed-time of communication latency from the initial trial of establishing the communication link.

7. The communication apparatus according to any one of Claims 1 to 6,
wherein said control unit comprises,
means for notifying remaining time of communication latency, which is acquired by subtracting the elapsed-time of communication latency from the initial trial of establishing the communication link from a maximum allowable communication latency.

8. The communication apparatus according to any one of Claims 1 to 7,
wherein said control unit comprises,
means for notifying information regarding availability of non-designated network when the non-designated network is available in a waiting state for the determination result by said determination unit.

9. A controlling method for communication apparatus, which is capable of using a plurality of networks based on a reservation of communication, the method comprising:
accepting the reservation of communication designating network;
determining whether a communication link can be established in the designated network; and
controlling utilization of the designated network or of non-designated network other than the designated network in accordance with the determination result by the determining step.

10. The controlling method for communication apparatus according to Claim 9,
wherein said step of determining comprises,
determining passage of predetermined period of time to determine inability of establishing a communication link if the link has not been established from an initial trial of establishing the communication link to the end of a predetermined period of time.

11. The controlling method for communication apparatus according to Claim 10,
wherein said step of determining comprises,
determining passage of predetermined time and date to determine inability of establishing a communication link if the link has not been established by a predetermined time and date.

12. The controlling method for communication apparatus according to any one of Claims 9 to 11,
wherein said step of determining comprises,
inputting a permission of execution of control in order to acquire the permission of execution of control to utilize non-designated network, and
controlling utilization of the non-designated network when acquiring the permission of execution from said user.

13. The controlling method for communication apparatus according to any one of Claims 9 to 12,
wherein said step of determining comprises,
notifying utilized network.

14. The controlling method for communication apparatus according to any one of Claims 9 to 13,
wherein said step of determining comprises
notifying elapsed-time of communication latency from the initial trial of establishing the communication link.

15. The controlling method for communication apparatus according to any one of Claims 9 to 14,
wherein said step of determining comprises,
notifying remaining time of communication latency, which is acquired by subtracting the elapsed-time of communication latency from the initial trial of establishing the communication link from a maximum allowable communication latency.

16. The controlling method for communication apparatus according to any one of Claims 9 to 15,
wherein said step of determining comprises,
notifying information regarding availability of non-designated network when the non-designated network is available in a waiting state for the determination result by said step of determining.
